# FASCICULE DE BREVET EUROPEEN

(11) **EP 4 449 188 B1**
(45) Date de publication et mention de la délivrance du brevet: **01.04.2026**
(21) Numéro de dépôt: 22839268.4
(22) Date de dépôt: 15.12.2022
(51) Int. Cl.: G02B 27/01

(54) **AFFICHEUR TETE HAUTE**
HEAD-UP-ANZEIGE
HEAD-UP DISPLAY

(30) Priorité: 16.12.2021 FR 2113726
(43) Date de publication de la demande: 23.10.2024
(73) Titulaire: Valeo Comfort and Driving Assistance, 94000 Créteil (FR)
(72) Inventeur: MERMILLOD, Pierre, 94000 Créteil (FR); GACHE, Stephane, 94000 Créteil (FR)
(74) Mandataire: Delplanque, Arnaud
(86) Numéro de dépôt international: PCT/EP2022/086088
(87) Numéro de publication internationale: WO 2023/111151

(56) Documents cités:
- FR-A1- 3 069 654
- US-A1- 2019 361 234

## Description

La présente invention concerne de manière générale le domaine des afficheurs.

Elle concerne plus particulièrement un afficheur tête haute, par exemple pour un véhicule automobile.

Pour le conducteur d'un véhicule automobile, il est particulièrement confortable de pouvoir visualiser des informations relatives au fonctionnement du véhicule, relatives à une voie de circulation faisant face au véhicule, ou autres, sans avoir pour cela à détourner son regard de cette voie de circulation.

Il est connu dans ce but d'équiper le véhicule automobile avec un afficheur dit « *tête haute* », comportant, à l'intérieur d'un boîtier, un système de génération d'images duquel émerge un faisceau lumineux source et un système optique de projection adapté pour projeter une image générée par le système de génération d'images vers l'utilisateur, via le pare-brise par exemple, de manière à former une image virtuelle dans le champ de vision d'un conducteur dudit véhicule automobile.

L'image virtuelle, comportant les informations à afficher, se superpose alors visuellement à l'environnement faisant face au véhicule.

Il est connu également des afficheurs tête haute permettant la projection de deux images virtuelles sur le pare-brise du conducteur. Dans ce cas de figure, la formation des deux images virtuelles peut être réalisée à des distances de projection différentes à partir, généralement, d'un ou plusieurs systèmes de génération d'images émettant plusieurs faisceaux source combinés à différents systèmes optiques de projection. Chaque système optique de projection projette un des faisceaux source, généralement par l'intermédiaire d'un miroir, de manière à former l'une des images virtuelles.

Il existe cependant des afficheurs tête haute projetant une double image virtuelle utilisant un unique système de génération d'images et un miroir commun aux différents systèmes optiques de projection. Ce type d'architecture est avantageux économiquement du fait du nombre réduit de composants, mais également techniquement car il permet d'étendre le champ de performances optiques de l'afficheur tête haute.

En réalité, la conception d'un afficheur tête haute projetant une double image virtuelle utilisant un unique système de génération d'images et un miroir commun aux différents systèmes optiques de projection n'est pas aisée du fait des contraintes imposées par le cahier des charges à remplir par l'afficheur tête haute, telles que les distances de projection, la taille système de génération d'images unique, les contraintes de positionnement du centre des images virtuelles par rapport à la direction de regard de l'observateur, ou encore la forme du miroir commun. Le document FR 3 069 654 A1 décrit un afficheur tête haute projetant une double image virtuelle.

Afin de remédier à ce problème, la présente invention propose un afficheur tête haute comportant :
- un système de génération d'images ;
- un système optique de projection comprenant un miroir commun et un miroir de repliement ;
caractérisé en ce que :
- le système de génération d'images est adapté pour émettre un premier faisceau lumineux source et un second faisceau lumineux source traversant un plan image;
- le système de projection comprend en outre un élément de redirection de faisceau par diffraction apte à dévier le premier faisceau lumineux source, en aval du plan image, en un premier faisceau intermédiaire en direction du miroir commun ;
- le miroir de repliement est apte à réfléchir le second faisceau lumineux source, en aval du plan image, en un second faisceau intermédiaire en direction du miroir commun ;
- ledit miroir commun est adapté pour intercepter et projeter respectivement lesdits premier faisceau intermédiaire et second faisceau intermédiaire, de manière à former une première image virtuelle à une première distance de projection et une seconde image virtuelle à une seconde distance de projection.

L'invention présente l'avantage de faire appel à un élément optique fonctionnant par diffraction, ce qui permet d'ajuster l'angle de déviation du premier faisceau source sans les contraintes des lois de réflexion spéculaire. Ainsi, l'invention permet une flexibilité dans l'architecture de l'afficheur tête haute, notamment par une réduction du nombre de composants à intégrer et propose une solution peu coûteuse et facile à intégrer.

Par exemple, le premier faisceau lumineux source traverse le plan image en une première zone délimitant une première image intermédiaire et le second faisceau lumineux source traverse le plan image en une seconde zone délimitant une seconde image intermédiaire.

Par exemple, l'élément de redirection de faisceau par diffraction est positionné entre le miroir commun et le miroir de repliement.

Par exemple, la première distance de projection est inférieure à la seconde distance de projection.

Dans un mode de réalisation, l'élément de redirection de faisceau par diffraction est réalisé dans une plaque holographique.

En particulier, l'élément de redirection de faisceau par diffraction peut être un hologramme de volume.

Dans un mode de réalisation, l'élément de redirection de faisceau par diffraction est réalisé dans un empilement de plaques holographiques.

Dans un autre mode de réalisation, l'élément de redirection de faisceau par diffraction est un élément optique diffractif.

Par exemple, le premier faisceau lumineux source est incident sur l'élément de redirection de faisceau par diffraction au niveau d'une première région et le second faisceau lumineux source est incident sur l'élément de redirection de faisceau par diffraction au niveau d'une seconde région disjointe de la première région.

Par exemple, le premier faisceau lumineux source et le second faisceau lumineux source se recouvrent dans une première zone du plan image.

Dans un autre exemple, le premier faisceau lumineux source et le second faisceau lumineux source se recouvrent dans une première zone de l'élément de redirection de faisceau par diffraction.

Par exemple, le premier faisceau source comprend une première portion dont le spectre d'émission présente une première composante spectrale centrée autour d'une première longueur d'onde et l'élément de redirection de faisceau par diffraction est apte à dévier seulement ladite première portion. Ainsi, le premier faisceau source est altéré seulement par l'élément de redirection de faisceau par diffraction. Si le spectre d'émission est constitué uniquement de la première composante spectrale, la première image virtuelle sera perçue monochrome.

Le premier faisceau source peut comprendre au moins une autre portion différente de la première portion, la au moins une autre portion présentant un spectre d'émission comprenant des composantes spectrales supplémentaires centrées autour de longueurs d'onde supplémentaires différentes de la première longueur d'onde, et dans lequel l'élément de redirection de faisceau par diffraction est apte à dévier en outre la au moins une autre portion. Dans ce cas, la première image virtuelle peut être perçue par exemple en couleurs.

Le second faisceau source peut présenter un spectre d'émission comprenant au moins une composante spectrale secondaire, ladite au moins une composante spectrale secondaire étant centrée autour d'une longueur d'onde secondaire différente de la première longueur d'onde et, le cas échéant, des longueurs d'onde supplémentaires.

Cette configuration permet de différencier la voie de projection de la première image virtuelle de celle de la seconde image virtuelle, en rendant insensible l'élément de redirection de faisceau par diffraction au second faisceau source.

Par exemple, le système de génération d'images comprend au moins une source laser pour émettre au moins en partie le premier faisceau lumineux source. Dans cette configuration, le premier faisceau source est cohérent spectralement et peut interagir de manière efficace avec l'élément de redirection de faisceau par diffraction.

Par exemple encore, le système de génération d'images comprend au moins une diode électroluminescente pour émettre au moins en partie le second faisceau lumineux source. En effet, à la différence du premier faisceau lumineux source, il n'y a pas de contrainte concernant la cohérence spectrale du second faisceau lumineux source, lequel interagit avec le miroir de repliement.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] est une vue schématique montrant l'intégration d'un afficheur tête-haute selon l'invention dans un véhicule automobile.
[Fig. 2] est une vue agrandie d'un mode de réalisation de l'afficheur tête haute de la figure 1 montrant le trajet des rayons lumineux issus du système de génération d'images à travers l'afficheur tête haute jusqu'à l'œil du conducteur.
[Fig. 3] est une vue de détail du mode de réalisation de la figure 2.
[Fig.4] est une autre vue de détail similaire de la figure 2 dans le cas d'un autre mode de réalisation.
[Fig.5] représente différentes géométries possibles d'un premier faisceau lumineux source et d'un second faisceau lumineux source utilisés dans le cadre de l'invention.

Il est à noter que sur ces figures les éléments structurels et/ou fonctionnels communs aux différentes variantes peuvent présenter les mêmes références.

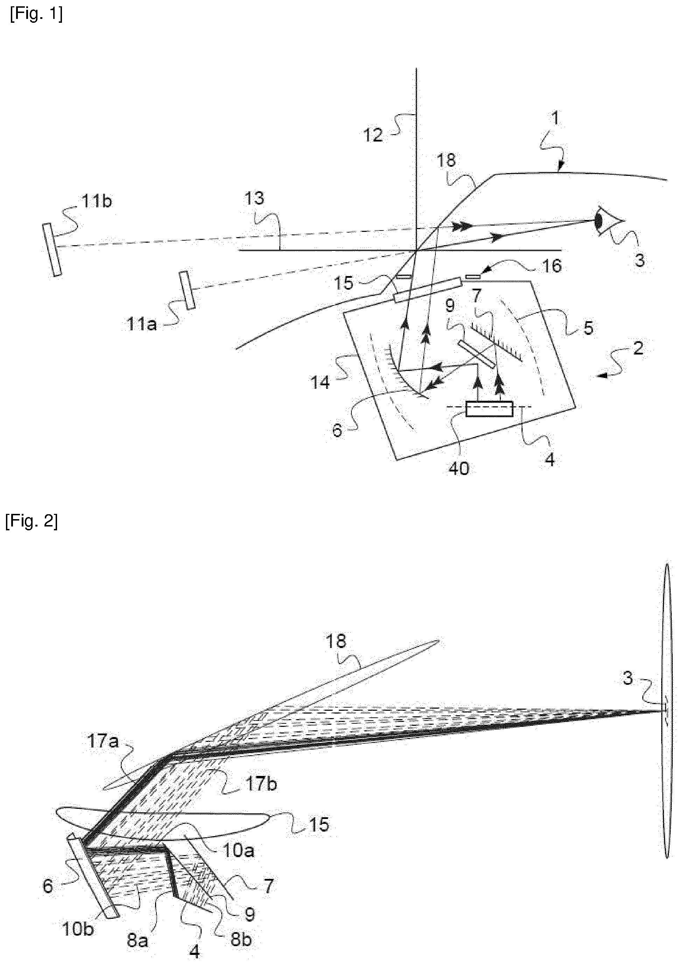

La figure 1 représente schématiquement, de côté, un véhicule automobile 1, équipé d'un afficheur tête haute 2 selon l'invention. Un individu, ici le conducteur 3 (dont seul un œil est représenté), est situé dans l'habitacle du véhicule.

L'afficheur tête haute 2 comporte tout d'abord un boîtier 14 généralement placé sous une planche de bord 16 du véhicule 1 et ayant, ici dans sa partie supérieure proche de la planche de bord 16, une ouverture fermée par une fenêtre transparente 15 adaptée pour laisser passer les différents faisceaux lumineux utiles au fonctionnement de l'afficheur, comme expliqué dans la suite.

Comme le montre la figure 1, l'afficheur tête haute 2 comprend, à l'intérieur de ce boîtier 14, un système de génération d'images 40 générant une première image et une seconde image spatialement distincte de la première image, un système optique de projection 5 comprenant un miroir commun 6 et un miroir de repliement 7.

Le système de génération d'images 40 peut par exemple comporter un écran laser (« laser scan » en anglais) comprenant une ou plusieurs sources laser formant une matrice de points sur un diffuseur. Par diffuseur, il est entendu un élément optique destiné à répartir de manière uniforme la lumière émanant d'une source de lumière. Le système de génération d'images 40 peut, en variante, comporter un projecteur de type DLP *(« Digital Light Processing* » en anglais) également assorti d'un diffuseur. Par exemple encore, le système de génération d'images 40 peut comporter un écran à cristaux liquides sur silicium (en anglais, *« Liquid crystal on silicon* » ou LCoS). Dans ce cas, une configuration particulière est un système holographique, où l'écran à cristaux liquides sur silicium est utilisé en tant que modulateur spatial de lumière, et où le faisceau provenant de l'écran LCoS subit une transformée de Fourier avant d'atteindre un diffuseur.

Dans tous les cas, selon l'invention, afin de générer la première image, le système de génération d'images 40 comprend une ou plusieurs sources cohérentes spectralement, c'est-à-dire monochromatiques.

Le système de génération d'images 40 émet un premier faisceau lumineux source 8a ainsi qu'un second faisceau lumineux source 8b.

Dans le cas où le système de génération d'images 40 comprend un écran laser (« laser scan » en anglais), celui-ci peut comprendre une ou plusieurs sources laser pour générer le premier faisceau source 8a, et une ou plusieurs sources laser pour générer le second faisceau lumineux source 8b.

Dans le cas où le système de génération d'images 40 comprend un projecteur de type DLP *(« Digital Light Processing* » en anglais), celui-ci peut comprendre une ou plusieurs sources laser pour générer le premier faisceau source 8a, et une ou plusieurs sources laser ou une ou plusieurs diodes électroluminescentes pour générer le second faisceau lumineux source 8b.

Dans le cas où le système de génération d'images 40 comprend un écran à cristaux liquides sur silicium (en anglais, *« Liquid crystal on silicon* » ou LCoS), celui-ci peut comprendre une ou plusieurs sources laser pour générer le premier faisceau source 8a, et une ou plusieurs sources laser pour générer le second faisceau lumineux source 8b.

Les images générées par le système de génération d'images 40 le sont en fonction d'un signal de commande provenant de l'ordinateur de bord (non représenté) du véhicule 1.

Le premier faisceau source 8a et le second faisceau source 8b traversent un plan image 4 en y générant respectivement, en une première zone, une première image intermédiaire, et en une seconde zone, une seconde image intermédiaire. Lorsque le système de génération d'images 40 comprend un diffuseur, ce dernier est positionné dans le plan image 4.

Comme illustré sur la figure 2, le système de projection 5 comprend en outre un élément de redirection de faisceau par diffraction 9. L'élément de redirection de faisceau par diffraction 9 dévie, dans une première voie de projection, le premier faisceau lumineux source 8a en un premier faisceau intermédiaire 10a en direction du miroir commun 6.

Le miroir de repliement 7, quant à lui, réfléchit, dans une seconde voie de projection, le second faisceau lumineux source 8b en un second faisceau intermédiaire 10b en direction du miroir commun 6.

Puis, le miroir commun 6 intercepte respectivement le premier faisceau intermédiaire 10a et le second faisceau intermédiaire 10b, et les projette vers l'extérieur via la fenêtre transparente 15 du boîtier 14 de manière à former respectivement une première image virtuelle 11a à une première distance de projection et une seconde image virtuelle 11b à une seconde distance de projection.

Par exemple, la première distance de projection est inférieure à la seconde distance de projection.

L'élément de redirection de faisceau par diffraction 9 est ici situé entre le miroir commun 6 et le miroir de repliement 7. Par ailleurs, dans l'exemple décrit, le plan image 4 est plus proche de l'élément de redirection de faisceau par diffraction 9 que du miroir de repliement 7. Ainsi, un premier chemin optique formé par la somme de la distance entre le plan image 4 et l'élément de redirection de faisceau par diffraction 9, et la distance entre l'élément de redirection de faisceau par diffraction 9 et le miroir commun 6, est plus court qu'un second chemin optique formé par la somme de la distance entre le plan image 4 et le miroir de repliement 7, et la distance entre le miroir de repliement 7 et le miroir commun 6. Le premier chemin optique correspond au chemin parcouru par la lumière pour former la première image virtuelle 11a, tandis que le second chemin optique correspond au chemin parcouru par la lumière pour former la seconde image virtuelle 11b. Dans cette configuration, la seconde image virtuelle 11b est appelée image pour la réalité augmentée, et la première image virtuelle 11a est appelée image standard. L'image pour la réalité augmentée est généralement visualisée à distance lointaine, tandis que l'image standard est visualisée à une distance plus rapprochée du conducteur 3.

Par exemple, la première image virtuelle 11a est située au-dessous de la seconde image virtuelle 11b selon la direction verticale 12. En effet, si la première image virtuelle 11a est l'image standard, et si la seconde image virtuelle 11b est l'image pour la réalité augmentée, la première image virtuelle 11a est vue par le conducteur avec un angle de regard plus abaissé (en anglais « *look down angle »)* par rapport à la seconde image virtuelle 11b.

La direction verticale 12 peut être définie comme étant perpendiculaire à la direction horizontale 13. La direction horizontale 13 quant à elle peut être définie comme étant la direction qui est sensiblement parallèle à la route sur laquelle le véhicule 1 circule. En d'autres termes, on pourrait dire que la direction horizontale 13 est la direction de la vitesse instantanée du véhicule 1se déplaçant sur la route.

Dans les deux cas précédents, typiquement, la seconde image virtuelle 11b est une image pour la réalité augmentée qui se superpose à un objet déterminé situé dans la scène réelle, par exemple à l'aide de détecteurs ou par analyse de la scène réelle, l'image étant déterminée par exemple en fonction de cet objet. Par exemple, la seconde image virtuelle 11b peut servir à avertir le conducteur 3 de la présence d'un piéton en représentant un cadre autour de celui-ci, ou de la présence de voitures en représentant un cadre autour de celles-ci, ou de la route à suivre en représentant un surlignage de celle-ci. La première image virtuelle 11a peut alors servir à afficher des informations sans corrélation avec un objet particulier de la scène réelle, telle que la vitesse courante, le niveau de la jauge d'essence, ou encore la température extérieure ou encore d'autres informations du tableau de bord.

Par exemple, la première image virtuelle 11a est de dimensions inférieures à celles de la seconde image virtuelle 11b.

On appellera premier faisceau final 17a le faisceau lumineux issu du premier faisceau intermédiaire 10a et projeté par le miroir commun 6, puis traversant la fenêtre transparente 15. De même, on appellera second faisceau final 17b le faisceau lumineux issu du second faisceau intermédiaire 10b et projeté par le miroir commun 6, puis traversant la fenêtre transparente 15.

Le premier faisceau final 17a et le second faisceau final 17b sont projetés vers une lame partiellement transparente 18. La lame partiellement transparente 18 réfléchit le premier faisceau lumineux final 17a et le second faisceau final 17b en direction du conducteur 3. Celui-ci voit alors l'image virtuelle projetée par le premier faisceau lumineux source 8a, correspondant à la première image virtuelle 11a, et l'image virtuelle projetée par le second faisceau lumineux source 8b, correspondant à la seconde image virtuelle 11b, et formées par réflexion sur la lame partiellement transparente 18.

Le trajet des rayons lumineux composant le premier faisceau source 8a, le second faisceau source 8b, le premier faisceau lumineux intermédiaire 10a, le second faisceau lumineux intermédiaire 10b, le premier faisceau final 17a et le second faisceau final 17b est illustré sur la figure 2.

Ici, la lame partiellement transparente 18 est le pare-brise du véhicule 1. En variante toutefois, la lame partiellement transparente 18 pourrait être un combineur dédié, par exemple situé entre le pare-brise du véhicule et la fenêtre transparente 15 du boîtier de l'afficheur tête haute 2.

De manière avantageuse, le miroir commun 6 est courbe, par exemple optimisé de manière à augmenter respectivement le grossissement de la première voie de projection et celui de la seconde voie de projection 5b et/ou compenser les distorsions ou les aberrations optiques qui pourraient être causées par la réflexion sur le pare-brise 18. Par exemple, le miroir commun peut être de type asphérique, ou de forme polynomiale.

Dans un mode de réalisation, l'élément de redirection de faisceau par diffraction 9 est réalisé dans une plaque holographique. En particulier, l'élément de redirection de faisceau par diffraction peut être un hologramme de volume (en anglais VHOE « Volume Holographique Optical Element ») enregistré dans la plaque holographique et fonctionnant en réflexion. On entend par hologramme de volume fonctionnant en réflexion un réseau de Bragg volumique fabriqué par l'enregistrement de franges d'interférences dans la plaque holographique. Le réseau de Bragg volumique réfléchit une lumière monochromatique, de longueur d'onde la longueur d'onde d'enregistrement, appelée encore première longueur d'onde, incidente sur le réseau avec un angle d'incidence donné, en une lumière à la première longueur d'onde dans une direction de diffraction donnée. La direction de diffraction donnée dépend des caractéristiques géométriques de l'hologramme de volume, qui dépendent elles-mêmes des paramètres d'enregistrement de l'hologramme de volume.

Dans une première variante, la plaque holographique a une taille telle qu'elle intercepte le second faisceau source 8b. L'hologramme de volume peut soit être enregistré dans la totalité de la plaque holographique, soit dans la partie de la plaque holographique interceptant uniquement le premier faisceau source 8a.

Dans une seconde variante, la plaque holographique a une taille ajustée au volume occupé par le premier faisceau source 8a. Autrement dit, la plaque holographique n'intercepte pas le second faisceau source 8b.

Ainsi, par le choix des paramètres d'enregistrement de l'hologramme de volume dans la plaque holographique, il est possible d'adapter la direction de diffraction dans laquelle celui-ci réfléchit une lumière monochromatique et donc d'adapter l'angle de déviation du premier faisceau source 8a. Ceci augmente la flexibilité de conception de l'afficheur tête haute 2 selon l'invention du fait de la flexibilité de positionnement et d'orientation de ses composants, grâce à l'adaptabilité de l'angle de déviation du premier faisceau source 8a. Cette propriété est permise par l'utilisation de l'élément de redirection de faisceau fonctionnant par diffraction 9 et est beaucoup moins envisageable si on utilise, comme dans l'art antérieur, des composants purement spéculaires qui imposent plus de contraintes sur les angles de réflexion.

Dans ce mode de réalisation, le premier faisceau source 8a présente un spectre d'émission comprenant une composante spectrale centrée autour de la première longueur d'onde et le second faisceau source 8b n'émet pas de lumière à la première longueur d'onde. En effet, pour dissocier le premier faisceau source 8a, et l'image virtuelle projetée par celui-ci 11a, respectivement, du second faisceau source 8b, et de l'image virtuelle projetée par ce dernier 11b, le second faisceau source 8b ne doit pas être affecté par l'hologramme de volume et doit pouvoir passer à travers celui-ci pour atteindre, le cas échéant, le miroir de repliement 7, et le miroir commun 6. Par exemple, la composante spectrale centrée autour de la première longueur d'onde présente une largeur à mi-hauteur de 2 nm.

De manière générale, selon l'invention, le spectre d'émission du premier faisceau source 8a et celui du second faisceau source 8b sont disjoints. L'élément de redirection de faisceau par diffraction 9 est transparent au spectre du second faisceau source 8b afin que ce dernier puisse le traverser, le cas échéant, sans être altéré. Par exemple, si le second faisceau source 8b présente un spectre d'émission disjoint d'au moins 5 nanomètres du spectre efficace de l'élément de redirection de faisceau par diffraction 9, le second faisceau source 8b n'interagira pas avec l'élément de redirection de faisceau par réfraction 9. Il est entendu par spectre efficace le spectre lumineux auquel l'élément de redirection par diffraction 9 est sensible.

Par exemple, pour obtenir une première image virtuelle 11a en couleurs et une seconde image virtuelle 11b en couleurs, le premier faisceau source 8a peut présenter un spectre d'émission avec trois composantes spectrales centrées respectivement à 470 nm (bleue), 527 nm (verte) et 630 nm (rouge), tandis que le second faisceau source 8b peut présenter un spectre d'émission avec trois composantes spectrales centrées respectivement à 475 nm (bleue), 532 nm (verte) et 650 nm (rouge). Le réglage de balance des blancs peut être ajusté par ajustement du niveau de chacune des composantes spectrales.

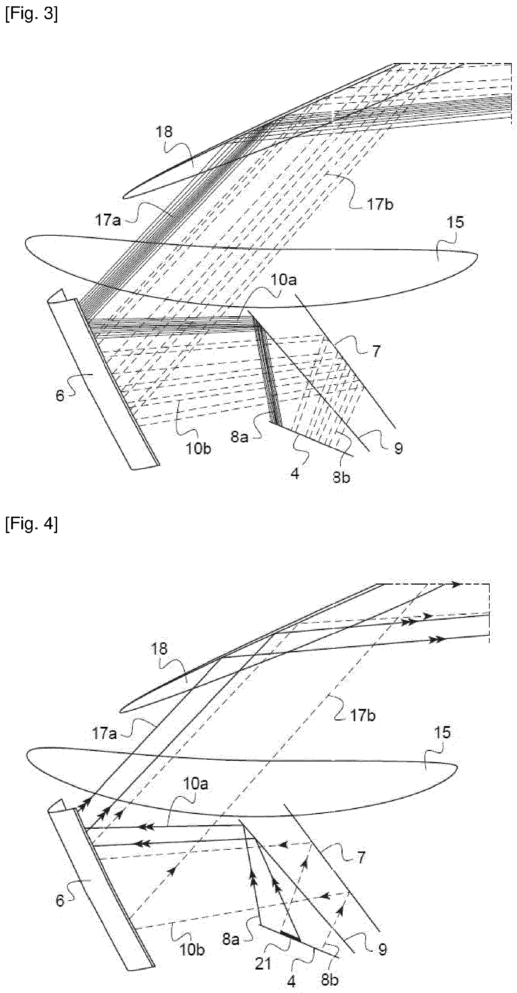

La figure 3 est une vue de détail du trajet des rayons lumineux dans la première voie de projection et la seconde voie de projection. On peut observer que le premier faisceau source 8a est dévié par l'élément de redirection de faisceau par diffraction 9 vers le miroir commun 6. On peut observer également que le second faisceau source 8b traverse l'élément de redirection de faisceau par diffraction 9 pour arriver sur le miroir de repliement 7 et être réfléchi de manière spéculaire par celui-ci vers le miroir commun en retraversant l'élément de redirection de faisceau par diffraction 9 sans être altéré par celui-ci.

Dans ce mode de réalisation le premier faisceau source 8a peut présenter un spectre d'émission comprenant uniquement la composante spectrale autour de la première longueur d'onde. En conséquence, la première image virtuelle est perçue comme monochrome par le conducteur 3.

Le premier faisceau source 8a et le second faisceau source 8b peuvent présenter des zones de recouvrement. Les zones de recouvrement sont déterminées par la position de la première image virtuelle 11a et de la seconde image virtuelle 11b, et aussi par la zone oculaire, c'est-à-dire l'ensemble des lieux où peuvent se trouver les yeux du conducteur en situation de conduite. La figure 4 illustre un exemple où le premier faisceau source 8a et le second faisceau source 8b se recouvrent spatialement au niveau du plan image 4 en une zone 21. Comme expliqué plus loin, le premier faisceau source 8a et le second faisceau source 8b peuvent se recouvrir également au niveau de l'élément de redirection de faisceau par diffraction 9.

Dans un deuxième mode de réalisation, l'élément de redirection de faisceau par diffraction 9 est réalisé dans un empilement de plaques holographiques. En particulier, l'élément de redirection de faisceau par diffraction peut être un empilement d'hologrammes de volume enregistrés dans chaque plaque holographique et fonctionnant tous en réflexion.

Par exemple, l'élément de redirection de faisceau par diffraction 9 consiste en l'empilement d'un premier hologramme de volume fonctionnant à une première longueur d'onde centrée dans le spectre rouge, d'un deuxième hologramme de volume fonctionnant à une deuxième longueur d'onde supplémentaire centrée dans le spectre vert, et d'un troisième hologramme de volume fonctionnant à une troisième longueur d'onde supplémentaire centrée dans le spectre bleu.

Dans cet exemple, le premier faisceau source 8a présente un spectre d'émission comprenant une première composante spectrale centrée autour de la première longueur d'onde, une deuxième composante spectrale centrée autour de la deuxième longueur d'onde supplémentaire et une troisième composante spectrale centrée autour de la troisième longueur d'onde supplémentaire. Le système de génération d'images 40 peut typiquement présenter une première portion générant la première image consistant en un écran laser comprenant trois sources laser rouge, vert et bleu. Ainsi, la première image virtuelle 11a peut être perçue en couleur par le conducteur. Le système de génération d'images 40 peut alors présenter une seconde portion générant la seconde image et présentant un spectre d'émission comprenant au moins une composante spectrale secondaire centrée autour d'une longueur d'onde secondaire différente de la première longueur d'onde, de la deuxième longueur d'onde supplémentaire et de la troisième longueur d'onde supplémentaire. Par exemple, la seconde portion peut être illuminée par une ou plusieurs sources laser émettant dans un spectre différent des spectres rouge, vert et bleu, ou par une ou plusieurs diodes électroluminescentes émettant dans un spectre différent des spectres rouge, vert et bleu.

Dans un troisième mode de réalisation, l'élément de redirection de faisceau par diffraction 9 est un élément optique diffractif (en anglais DOE « Diffractive Optical Element »). Par élément optique diffractif, il est entendu un élément optique fonctionnant par des phénomènes de diffraction.

Par exemple, l'élément optique diffractif peut être un réseau de diffraction gravé fonctionnant en réflexion et conçu pour ne réfléchir que dans un seul ordre de diffraction. Etant donné qu'un réseau de diffraction peut réfléchir n'importe quelle longueur d'onde, afin d'éviter une pluralité d'angles de déviation du premier faisceau source provenant d'un spectre du premier faisceau source 8a présentant plusieurs composantes spectrales différentes, le premier faisceau source 8a présente préférentiellement, dans cet exemple, un spectre d'émission monochromatique. Ce spectre d'émission monochromatique est centré autour d'une longueur d'onde principale choisie en fonction de l'angle de déviation du premier faisceau source 8a adapté à l'architecture de l'afficheur tête haute 2. Comme dans les autres modes de réalisation, le spectre d'émission du second faisceau source 8b, autrement dit, la ou les sources illuminant la portion du système de génération d'images 40 générant la seconde image, sera choisi pour ne pas comprendre la longueur d'onde principale du spectre monochromatique du premier faisceau source 8a.

Par exemple encore, l'élément optique diffractif peut être un élément optique binaire, c'est-à-dire présentant une structure de surface quantifiée en hauteur.

Dans une première variante, l'élément optique diffractif peut être gravé sur un support de taille telle que ce support intercepte le second faisceau source 8b. L'élément optique diffractif peut être gravé dans la totalité du support, soit dans la partie du support interceptant uniquement le premier faisceau source 8a.

Dans une seconde variante, le support a une taille ajustée au volume occupé par le premier faisceau source 8a. Autrement dit, le support n'intercepte pas le second faisceau source 8b.

Les figures 2, 3 et 4 illustrent les modes de réalisation avec une plaque holographique dans laquelle un hologramme de volume est enregistré, ou un empilement de plaques holographiques dans chacune desquelles un hologramme de volume est enregistré, ou un élément optique diffractif. Dans le cas du mode de réalisation avec un élément optique diffractif, il est préférable que le premier faisceau lumineux source 8a et le second faisceau lumineux source 8b ne se recouvrent pas au niveau de l'élément de redirection de faisceau par diffraction 9. En effet, l'élément optique diffractif réagit non pas à une unique longueur d'onde mais à toutes les longueurs d'onde et pourrait donc interagir avec à la fois le premier faisceau lumineux source 8a et le second faisceau lumineux source 8b si ceux-ci se recouvraient au niveau de l'élément optique diffractif. Ceci pourrait générer des images parasites. Autrement dit, le premier faisceau lumineux source 8a est incident sur l'élément de redirection de faisceau par diffraction 9 au niveau d'une première région et le second faisceau lumineux source 8b est incident sur l'élément de redirection de faisceau par diffraction 9 au niveau d'une seconde région disjointe de la première région.

Un des avantages de l'utilisation comme élément de redirection de faisceau par diffraction 9 d'une plaque holographique comprenant un hologramme de volume, ou d'un empilement de plaques holographiques comprenant plusieurs hologrammes de volume, est d'empêcher, par filtrage en longueurs d'onde, l'interaction de l'élément de redirection de faisceau par diffraction 9 avec le second faisceau source 8b dans le cas où le premier faisceau lumineux source 8a et le second faisceau lumineux source 8b se recouvrent au niveau de l'élément de redirection de faisceau par diffraction 9. Toute image parasite résultant d'une telle interaction est donc évitée.

L'utilisation comme élément de redirection de faisceau par diffraction 9 d'une plaque holographique comprenant un hologramme de volume, ou d'un empilement de plaques holographiques comprenant plusieurs hologrammes de volume permet donc une plus grande flexibilité dans la conception et l'architecture des différents composants de l'afficheur tête-haute 2 selon l'invention, par exemple, une flexibilité sur le recouvrement du premier faisceau lumineux source 8a et du second faisceau lumineux source 8b.

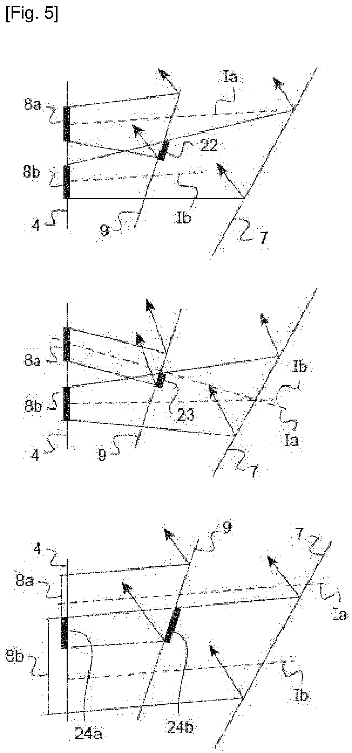

La figure 5 illustre plusieurs configurations de recouvrement du premier faisceau lumineux source 8a avec le second faisceau lumineux source 8b, où le recouvrement se situe au niveau de l'élément de redirection de faisceau par diffraction 9. Ces configurations sont donc possibles dans le cas où l'élément de redirection de faisceau par diffraction 9 est une plaque holographique ou un empilement de plaques holographiques.

Dans une première configuration correspondant au schéma du haut de la figure 5, le premier faisceau lumineux source 8a et le second faisceau lumineux source 8b présentent des indicatrices la et Ib parallèles. Par indicatrice, il est entendu direction moyenne de propagation. Le premier faisceau lumineux source 8a et le second faisceau lumineux source 8b se recouvrent au niveau de l'élément de redirection de faisceau par diffraction 9 en une zone 22.

Dans une deuxième configuration correspondant au schéma du milieu de la figure 5, le premier faisceau lumineux source 8a et le second faisceau lumineux source 8b présentent des indicatrices la et Ib non parallèles. Le premier faisceau lumineux source 8a et le second faisceau lumineux source 8b se recouvrent au niveau de l'élément de redirection de faisceau par diffraction 9 en une zone 23.

Dans une troisième configuration correspondant au schéma du bas de la figure 5, le premier faisceau lumineux source 8a et le second faisceau lumineux source 8b présentent des indicatrices la et Ib parallèles et se recouvrent à la fois au niveau du plan image 4 en une zone 24a et au niveau de l'élément de redirection de faisceau par diffraction 9 en une zone 24b.

L'utilisation de l'élément de redirection de faisceau par diffraction 9 selon l'invention permet de dissocier la première voie de projection, correspondant à la voie de projection de la première image virtuelle 11a, et la seconde voie de projection, correspondant à la voie de projection de la seconde image virtuelle 11b. Il en résulte une architecture simplifiée de l'afficheur tête haute 2 selon l'invention, avec un unique système de génération d'images 40 et un miroir commun 6 à la première voie de projection et à la seconde voie de projection. Ce nombre réduit de composants permet de réduire les coûts de fabrication de l'afficheur tête haute mais également d'envisager de diminuer l'encombrement de l'afficheur tête haute 2.

## Revendications

1. Afficheur tête haute (2) comportant :
- un système de génération d'images (40) ;
- un système optique de projection (5) comprenant un miroir commun (6) et un miroir de repliement (7) ;
**caractérisé en ce que** :
- ledit système de génération d'images (40) est adapté pour émettre un premier faisceau lumineux source (8a) et un second faisceau lumineux source (8b) traversant un plan image (4);
- ledit système de projection (5) comprend en outre un élément de redirection de faisceau par diffraction (9) apte à dévier le premier faisceau lumineux source (8a) en aval du plan image (4) en un premier faisceau intermédiaire (10a) en direction du miroir commun (6);
- le miroir de repliement (7) est apte à réfléchir le second faisceau lumineux source (8b) en aval du plan image (4) en un second faisceau intermédiaire (10b) en direction du miroir commun (6);
- ledit miroir commun (6) est adapté pour intercepter et projeter respectivement lesdits premier faisceau intermédiaire (10a) et second faisceau intermédiaire (10b), de manière à former une première image virtuelle (11a) à une première distance de projection et une seconde image virtuelle (11b) à une seconde distance de projection.

2. Afficheur tête-haute selon la revendication 1, dans lequel l'élément de redirection de faisceau par diffraction (9) est positionné entre le miroir commun (6) et le miroir de repliement (7).

3. Afficheur tête-haute selon la revendication 1 ou 2, dans lequel la première distance de projection est inférieure à la seconde distance de projection.

4. Afficheur tête-haute selon l'une des revendications 1 à 3, dans lequel l'élément de redirection de faisceau par diffraction (9) est réalisé dans une plaque holographique.

5. Afficheur tête-haute selon la revendication 4, dans lequel l'élément de redirection de faisceau par diffraction (9) est un hologramme de volume.

6. Afficheur tête-haute selon l'une des revendications 1 à 3, dans lequel l'élément de redirection de faisceau par diffraction (9) est réalisé dans un empilement de plaques holographiques.

7. Afficheur tête-haute selon l'une des revendications 1 à 3, dans lequel l'élément de redirection de faisceau par diffraction (9) est un élément optique diffractif.

8. Afficheur tête-haute (2) selon l'une des revendications 1 à 7, dans lequel le premier faisceau lumineux source (8a) est incident sur l'élément de redirection de faisceau par diffraction (9) au niveau d'une première région et le second faisceau lumineux source (8b) est incident sur l'élément de redirection de faisceau par diffraction (9) au niveau d'une seconde région disjointe de la première région.

9. Afficheur tête-haute (2) selon l'une des revendications 1 à 8, dans lequel le premier faisceau lumineux source (8a) et le second faisceau lumineux source (8b) se recouvrent dans une première zone (21,24a) du plan image (4).

10. Afficheur tête-haute (2) selon l'une des revendications 1 à 6 ou 9 prise dans la dépendance de l'une des revendications 1 à 6, dans lequel le premier faisceau lumineux source (8a) et le second faisceau lumineux source (8b) se recouvrent dans une première zone (22,23,24b) de l'élément de redirection de faisceau par diffraction (9).

11. Afficheur tête-haute selon l'une des revendications 1 à 10, dans lequel le premier faisceau source (8a) comprend une première portion dont le spectre d'émission présente une première composante spectrale centrée autour d'une première longueur d'onde et l'élément de redirection de faisceau par diffraction (9) est apte à dévier seulement ladite première portion.

12. Afficheur tête-haute (2) selon la revendication 11, dans lequel le premier faisceau source (8a) comprend au moins une autre portion différente de la première portion, la au moins une autre portion présentant un spectre d'émission comprenant des composantes spectrales supplémentaires centrées autour de longueurs d'onde supplémentaires différentes de la première longueur d'onde, et dans lequel l'élément de redirection de faisceau par diffraction (9) est apte à dévier en outre la au moins une autre portion.

13. Afficheur tête-haute (2) selon la revendication 11 ou 12, dans lequel le second faisceau source (8b) présente un spectre d'émission comprenant au moins une composante spectrale secondaire, ladite au moins une composante spectrale secondaire étant centrée autour d'une longueur d'onde secondaire différente de la première longueur d'onde et, le cas échéant, des longueurs d'onde supplémentaires.

14. Afficheur tête-haute (2) selon l'une des revendications 1 à13, dans lequel le système de génération d'images (40) comprend au moins une source laser pour émettre au moins en partie le premier faisceau lumineux source (8a).

15. Afficheur tête-haute (2) selon l'une des revendications 1 à 14, dans lequel le système de génération d'images (40) comprend au moins une diode électroluminescente pour émettre au moins en partie le second faisceau lumineux source (8b).

## Patentansprüche

1. Head-up-Display (2), umfassend:
- ein Bilderzeugungssystem (40);
- ein optisches Projektionssystem (5), das einen gemeinsamen Spiegel (6) und einen Faltspiegel (7) umfasst;
**dadurch gekennzeichnet, dass**:
- das Bilderzeugungssystem (40) angepasst ist, um einen ersten Lichtquellstrahl (8a) und einen zweiten Lichtquellstrahl (8b) auszusenden, die eine Bildebene (4) durchqueren;
- das Projektionssystem (5) ferner ein Strahlumlenkungselement durch Beugung (9) umfasst, das geeignet ist, den ersten Lichtquellstrahl (8a) stromabwärts der Bildebene (4) in einen ersten Zwischenstrahl (10a) in Richtung des gemeinsamen Spiegels (6) abzulenken;
- der Faltspiegel (7) geeignet ist, den zweiten Lichtquellstrahl (8b) stromabwärts der Bildebene (4) in einen zweiten Zwischenstrahl (10b) in Richtung des gemeinsamen Spiegels (6) zu reflektieren;
- der gemeinsame Spiegel (6) angepasst ist, um den ersten Zwischenstrahl (10a) und den zweiten Zwischenstrahl (10b) jeweils abzufangen und zu projizieren, um ein erstes virtuelles Bild (11a) in einer ersten Projektionsentfernung und ein zweites virtuelles Bild (11b) in einer zweiten Projektionsentfernung zu erzeugen.

2. Head-up-Display nach Anspruch 1, wobei das Strahlumlenkungselement durch Beugung (9) zwischen dem gemeinsamen Spiegel (6) und dem Faltspiegel (7) positioniert ist.

3. Head-up-Display nach Anspruch 1 oder 2, wobei die erste Projektionsentfernung kleiner als die zweite Projektionsentfernung ist.

4. Head-up-Display nach einem der Ansprüche 1 bis 3, wobei das Strahlumlenkungselement durch Beugung (9) in einer holographischen Platte realisiert ist.

5. Head-up-Display nach Anspruch 4, wobei das Strahlumlenkungselement durch Beugung (9) ein Volumenhologramm ist.

6. Head-up-Display nach einem der Ansprüche 1 bis 3, wobei das Strahlumlenkungselement durch Beugung (9) in einer Stapelung von holographischen Platten realisiert ist.

7. Head-up-Display nach einem der Ansprüche 1 bis 3, wobei das Strahlumlenkungselement durch Beugung (9) ein diffraktives optisches Element ist.

8. Head-up-Display (2) nach einem der Ansprüche 1 bis 7, wobei der erste Lichtquellstrahl (8a) auf das Strahlumlenkungselement durch Beugung (9) in einem ersten Bereich einfällt und der zweite Lichtquellstrahl (8b) auf das Strahlumlenkungselement durch Beugung (9) in einem zweiten Bereich einfällt, der vom ersten Bereich getrennt ist.

9. Head-up-Display (2) nach einem der Ansprüche 1 bis 8, wobei sich der erste Lichtquellstrahl (8a) und der zweite Lichtquellstrahl (8b) in einer ersten Zone (21,24a) der Bildebene (4) überlappen.

10. Head-up-Display (2) nach einem der Ansprüche 1 bis 6 oder 9 in Abhängigkeit von einem der Ansprüche 1 bis 6, wobei sich der erste Lichtquellstrahl (8a) und der zweite Lichtquellstrahl (8b) in einer ersten Zone (22,23,24b) des Strahlumlenkungselements durch Beugung (9) überlappen.

11. Head-up-Display nach einem der Ansprüche 1 bis 10, wobei der erste Quellstrahl (8a) einen ersten Teil umfasst, dessen Emissionsspektrum eine erste spektrale Komponente aufweist, die um eine erste Wellenlänge zentriert ist, und das Strahlumlenkungselement durch Beugung (9) geeignet ist, nur diesen ersten Teil abzulenken.

12. Head-up-Display (2) nach Anspruch 11, wobei der erste Quellstrahl (8a) mindestens einen weiteren Teil umfasst, der sich vom ersten Teil unterscheidet, wobei der mindestens eine weitere Teil ein Emissionsspektrum aufweist, das zusätzliche spektrale Komponenten umfasst, die um zusätzliche Wellenlängen zentriert sind, die sich von der ersten Wellenlänge unterscheiden, und wobei das Strahlumlenkungselement durch Beugung (9) geeignet ist, ferner den mindestens einen weiteren Teil abzulenken.

13. Head-up-Display (2) nach Anspruch 11 oder 12, wobei der zweite Quellstrahl (8b) ein Emissionsspektrum aufweist, das mindestens eine sekundäre spektrale Komponente umfasst, wobei die mindestens eine sekundäre spektrale Komponente um eine sekundäre Wellenlänge zentriert ist, die sich von der ersten Wellenlänge und gegebenenfalls von den zusätzlichen Wellenlängen unterscheidet.

14. Head-up-Display (2) nach einem der Ansprüche 1 bis 13, wobei das Bilderzeugungssystem (40) mindestens eine Laserquelle umfasst, um zumindest teilweise den ersten Lichtquellstrahl (8a) auszusenden.

15. Head-up-Display (2) nach einem der Ansprüche 1 bis 14, wobei das Bilderzeugungssystem (40) mindestens eine Leuchtdiode umfasst, um zumindest teilweise den zweiten Lichtquellstrahl (8b) auszusenden.

## Claims

1. Head-up display (2) comprising:
- an image generation system (40);
- an optical projection system (5) comprising a common mirror (6) and a folding mirror (7);
**characterized in that**:
- said image generation system (40) is adapted to emit a first source light beam (8a) and a second source light beam (8b) passing through an image plane (4);
- said projection system (5) further comprises a diffraction beam redirection element (9) capable of deflecting the first source light beam (8a) downstream of the image plane (4) into a first intermediate beam (10a) towards the common mirror (6);
- the folding mirror (7) is capable of reflecting the second source light beam (8b) downstream of the image plane (4) into a second intermediate beam (10b) towards the common mirror (6);
- said common mirror (6) is adapted to intercept and project respectively said first intermediate beam (10a) and second intermediate beam (10b), so as to form a first virtual image (11a) at a first projection distance and a second virtual image (11b) at a second projection distance.

2. Head-up display according to claim 1, wherein the diffraction beam redirection element (9) is positioned between the common mirror (6) and the folding mirror (7).

3. Head-up display according to claim 1 or 2, wherein the first projection distance is less than the second projection distance.

4. Head-up display according to any one of claims 1 to 3, wherein the diffraction beam redirection element (9) is made in a holographic plate.

5. Head-up display according to claim 4, wherein the diffraction beam redirection element (9) is a volume hologram.

6. Head-up display according to any one of claims 1 to 3, wherein the diffraction beam redirection element (9) is made in a stack of holographic plates.

7. Head-up display according to any one of claims 1 to 3, wherein the diffraction beam redirection element (9) is a diffractive optical element.

8. Head-up display (2) according to any one of claims 1 to 7, wherein the first source light beam (8a) is incident on the diffraction beam redirection element (9) at a first region and the second source light beam (8b) is incident on the diffraction beam redirection element (9) at a second region disjoint from the first region.

9. Head-up display (2) according to any one of claims 1 to 8, wherein the first source light beam (8a) and the second source light beam (8b) overlap in a first zone (21,24a) of the image plane (4).

10. Head-up display (2) according to any one of claims 1 to 6 or 9 when dependent on any one of claims 1 to 6, wherein the first source light beam (8a) and the second source light beam (8b) overlap in a first zone (22,23,24b) of the diffraction beam redirection element (9).

11. Head-up display according to any one of claims 1 to 10, wherein the first source beam (8a) comprises a first portion whose emission spectrum has a first spectral component centered around a first wavelength and the diffraction beam redirection element (9) is capable of deflecting only said first portion.

12. Head-up display (2) according to claim 11, wherein the first source beam (8a) comprises at least one other portion different from the first portion, the at least one other portion having an emission spectrum comprising additional spectral components centered around additional wavelengths different from the first wavelength, and wherein the diffraction beam redirection element (9) is capable of further deflecting the at least one other portion.

13. Head-up display (2) according to claim 11 or 12, wherein the second source beam (8b) has an emission spectrum comprising at least one secondary spectral component, said at least one secondary spectral component being centered around a secondary wavelength different from the first wavelength and, if applicable, from the additional wavelengths.

14. Head-up display (2) according to any one of claims 1 to 13, wherein the image generation system (40) comprises at least one laser source to emit at least partly the first source light beam (8a).

15. Head-up display (2) according to any one of claims 1 to 14, wherein the image generation system (40) comprises at least one light-emitting diode to emit at least partly the second source light beam (8b).
